# EUROPEAN PATENT SPECIFICATION

(11) **EP 0 571 181 B1**
(45) Date of publication and mention of the grant of the patent: **21.01.1998**
(21) Application number: 93303839.0
(22) Date of filing: 18.05.1993
(51) Int. Cl.: B29C 49/26

(54) **An improved method of making a laminated tubular body and apparatus therefor**
Verfahren zum Herstellen eines laminierten rohrförmigen Körpers und Vorrichtung dafür
Procédé perfectionné pour fabriquer un élément tubulaire stratifié et dispositif pour sa fabrication

(30) Priority: 20.05.1992 AU 17020/92
(43) Date of publication of application: 24.11.1993
(73) Proprietor: IMPACT INTERNATIONAL PTY. LTD., Smithfield New South Wales 2164 (AU)
(72) Inventor: Lajovic, Dusan Sava, Smithfield, New South Wales 2164 (AU)
(74) Representative: Luckhurst, Anthony Henry William

(56) References cited:
- AU-A- 620 562
- FR-A- 2 264 649
- GB-A- 2 065 263
- US-A- 3 376 180

## Description

The invention concerns a method of making a laminated tubular body and apparatus therefor. More particularly, the invention relates to laminated tubular bodies having an extruded inner layer inflated to contact the inner surface of an outer layer.

The invention is therefore particularly applicable to lined containers. Such containers are shown, for example, in US Patent 4,696,840 which discloses a composite bag-in-box container formed by blow moulding a plastics inner bag inside a cardboard outer box to form the container.

Such containers and their forming process suffer from several disadvantages. Firstly, the process requires an injection nozzle to protrude into the container through what will ultimately become the pouring spout. The nozzle is withdrawn from the spout and the container is subsequently filled through the spout, which is finally sealed at the end of the process. This procedure is essentially a batch process and therefore relatively slow, inefficient, and does not lend itself to continuous high rate production. Further, it has been found generally that in the formation of composite laminated containers, it is difficult to consistently obtain adequate adhesion between the lining and the outer layer in a fast and cost effective manner. Consequently, the lining often breaks away from the outer container.

AU-A-620562, on which the preamble of claim 1 is based, discloses a method of continuously forming laminated tubular bodies, said method including the steps of drawing opposite longitudinal edges of a strip of flexible at least partially resilient sheet material into close proximity, joining said longitudinal edges to form a tubular body having an inner surface and an outer surface, extruding a hollow plastics lining member within said tubular body, expanding the hollow lining member within the tubular body to form a substantially continuous lining, applying internal and external pressure substantially simultaneously to bring the inner lining into bonding engagement with the inner surface thereby continuously to form a laminated tube, and cutting the tube into bodies of preselected lengths.

AU-A-620562, on which also the preamble of claim 18 is based, also discloses an apparatus for continuously forming a laminated tubular body, said apparatus including means for drawing opposite longitudinal edges of a strip of sheet material into close proximity, means for joining said longitudinal edges to form a tubular body having an inner surface and an outer surface, a die for extruding a hollow plastics lining member within said tubular body, means for expanding the hollow lining member within the tubular body to form a substantially continuous lining, pressure means for simultaneously applying internal and external pressure for pressing the inner lining into bonding engagement with said inner surface, and cutting means for cutting the continuously formed laminated tubular body into preselected lengths.

The bonding pressure between the lining and the outer member of the prior art was not very effective and led often to failure of the bond.
The object of the invention is therefore to solve these disadvantages. This is achieved by the features of claims 1 and 18. Further embodiments of the invention are defined in the dependent claims.

In the drawings :-
Figure 1a illustrates a prior art apparatus;
Figure 1b illustrates a portion of a second form of prior art apparatus;
Figure 1c illustrates a portion of the apparatus of figure 1a in more detail;
Figure 1d illustrates a third prior art apparatus;
Figure 1e illustrates a portion of a fourth prior art apparatus;
Figure 1f illustrates a fifth prior art apparatus;
Figure 2 illustrates a strip of material for use in the method according to the invention;
Figure 3 illustrates a sixth prior art apparatus;
Figures 4a and 4b illustrate a spout having a detachable plastics tab;
Figure 5 illustrates a laminated tubular body;
Figures 6a and 6b illustrate a first spout arrangement incorporated into the laminated tubular body shown in figure 4;
Figures 6c and 6d illustrate an alternative spout arrangement;
Figure 7 is a diagrammatic view showing an industrial plant for the mass production of laminated tubular bodies;
Figure 8 illustrates a method of joining and sealing the longitudinal edges of the tubular body;
Figure 9 illustrates an alternative form of longitudinal seam;
Figure 10a illustrates another apparatus;
Figure 10b illustrates some additional processing options which may follow the steps applied by the apparatus of figure 10a;
Figures 10c and 10d illustrate a portion of an alternative apparatus to that shown in figure 10a;
Figure 11 is a sectional side elevation showing an embodiment of an apparatus for use in the manufacture of laminated tubular bodies according to the invention, embodying complementary internal and external pressure roller assemblies;
Figure 12 is an enlarged sectional side elevation of the pressure roller assembly shown in Figure 11;
Figure 13 is a section taken on line 13-13 of Figure 11;
Figure 14 is a section taken on line 14-14 of Figure 11;
Figure 15 is a section taken on line 15-15 of Figure 11;
Figure 16 is a sectional view similar to figures 13 and 14 showing an alternative embodiment wherein a series of circumferentially spaced friction pads replace the external pressure rollers.

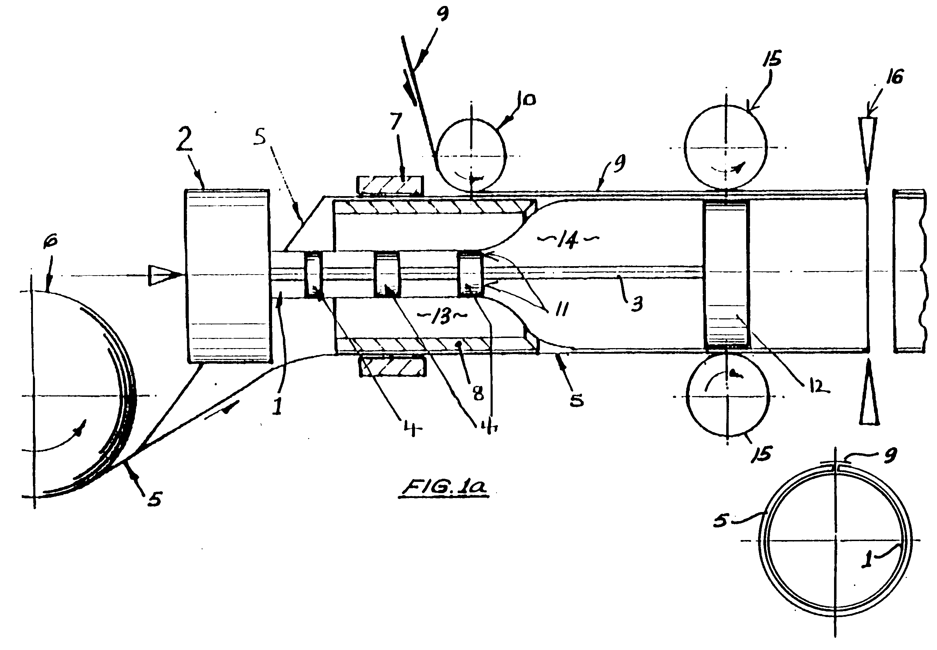

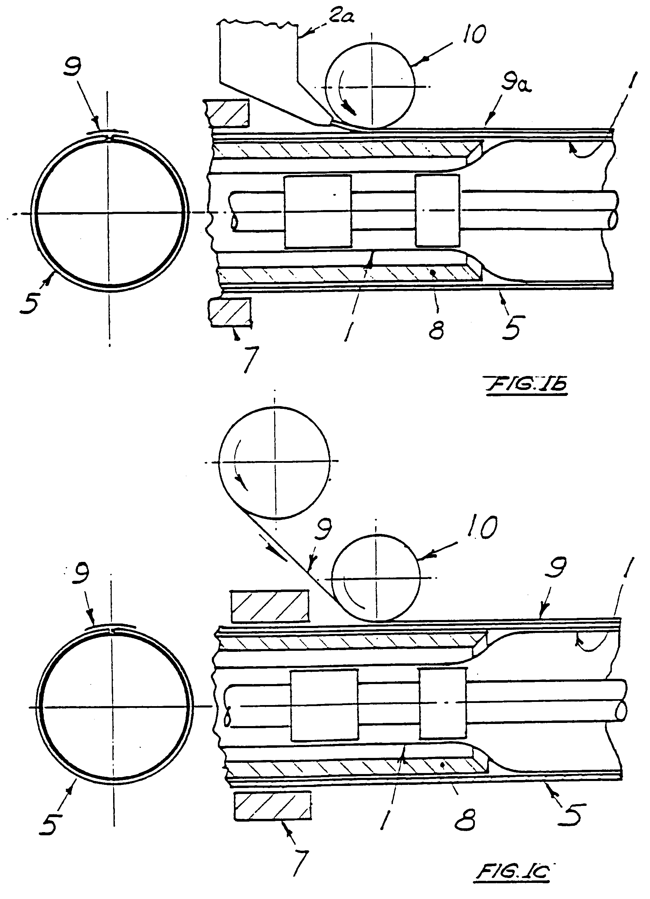

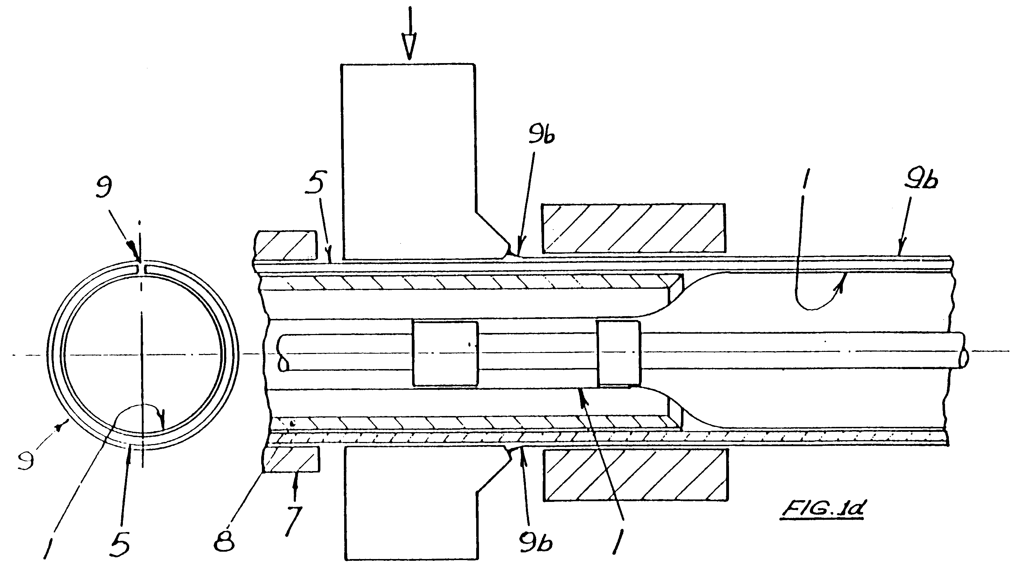

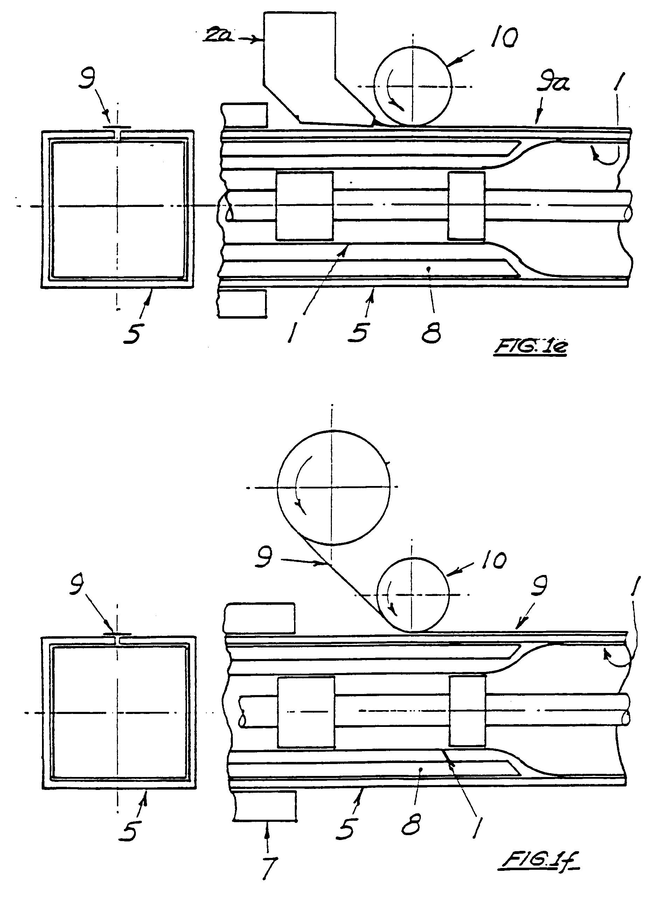

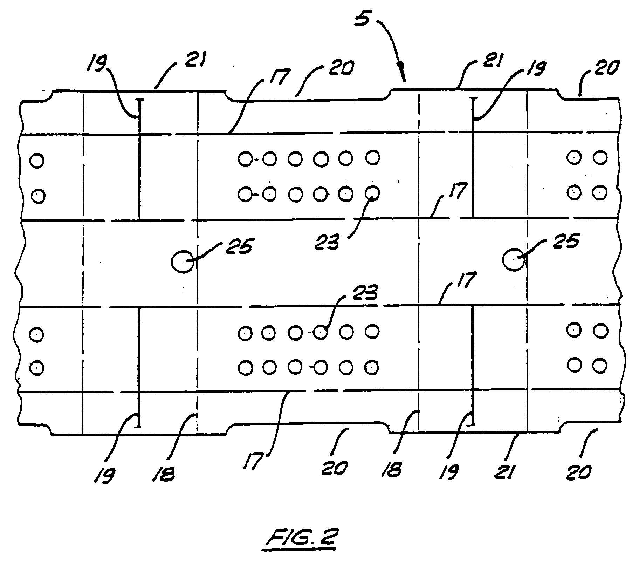

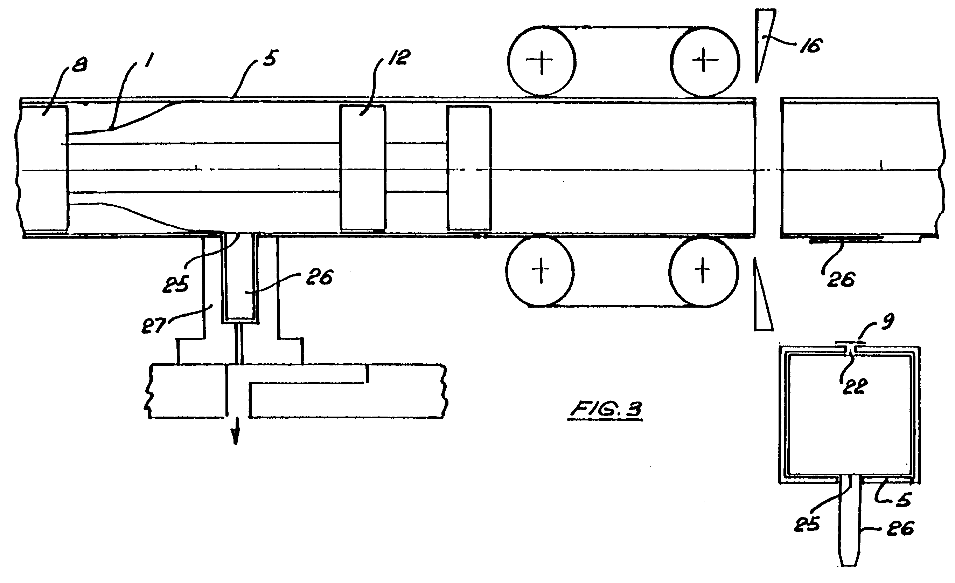

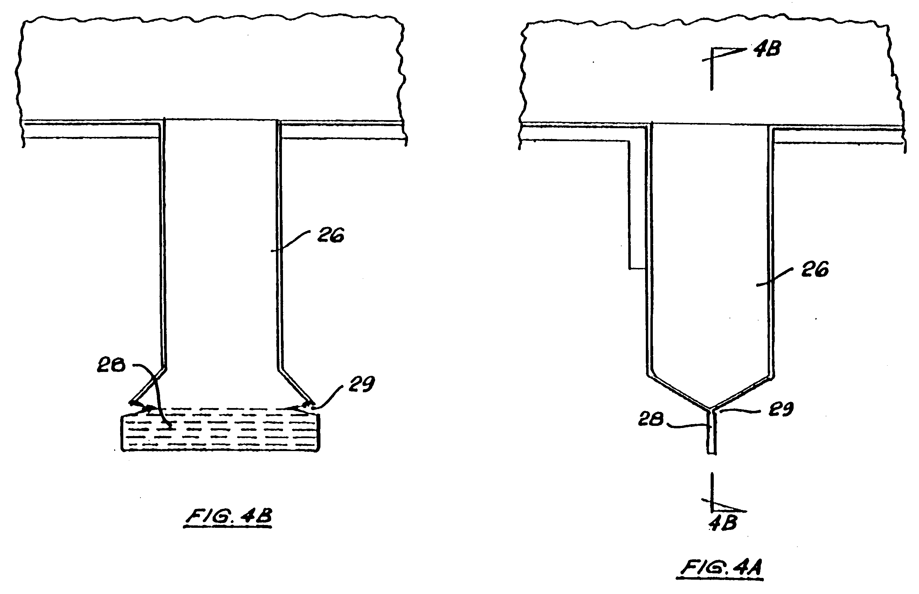

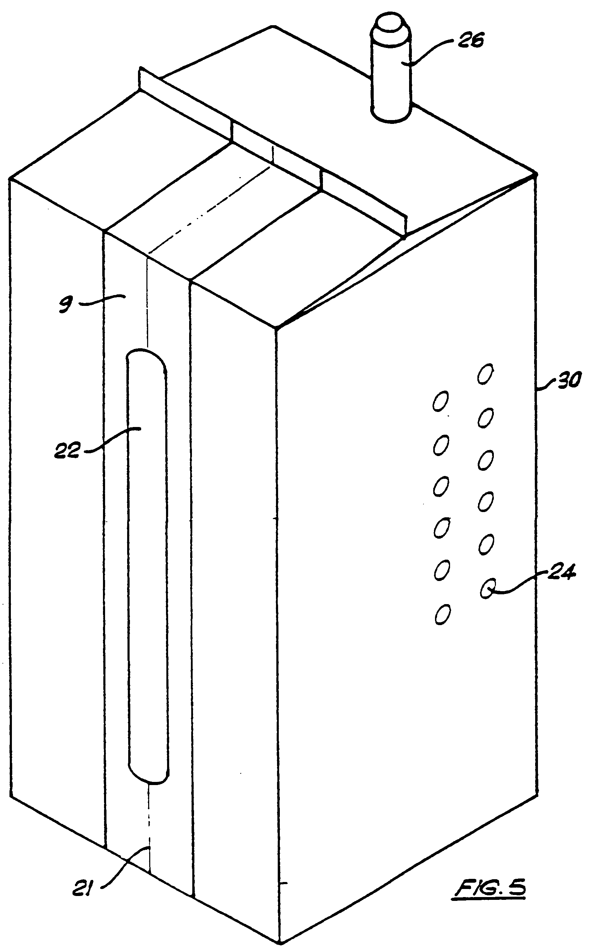

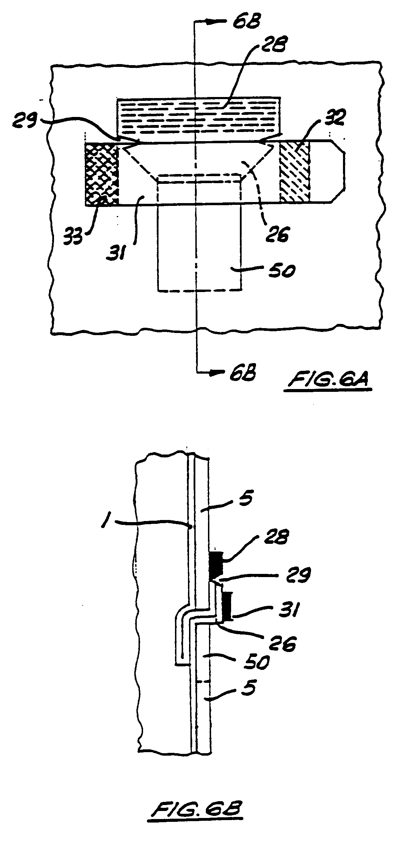

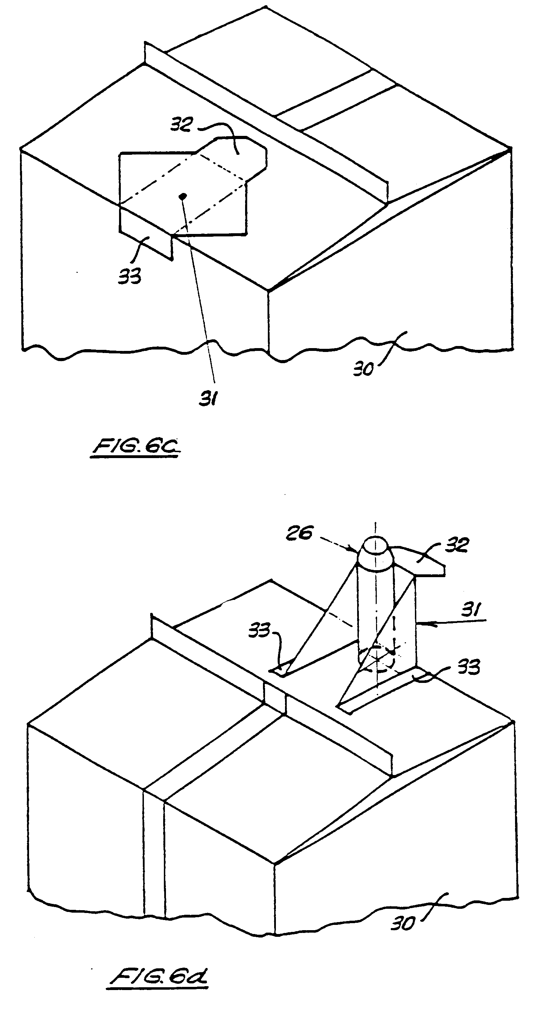

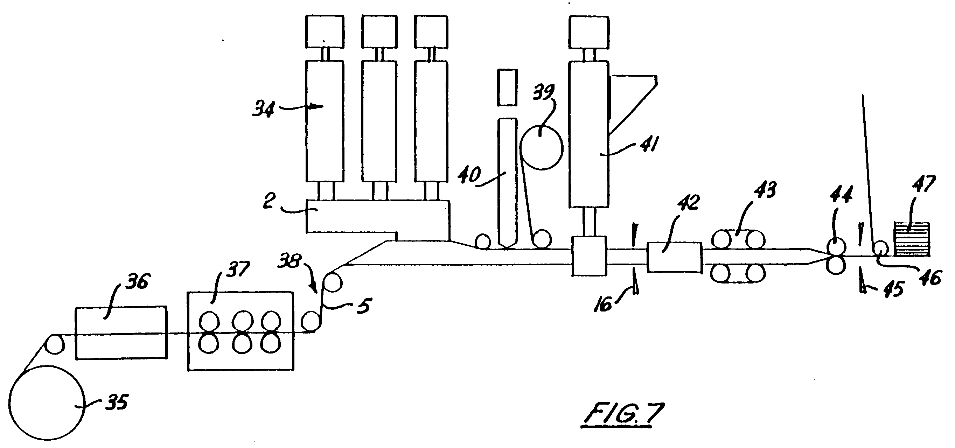

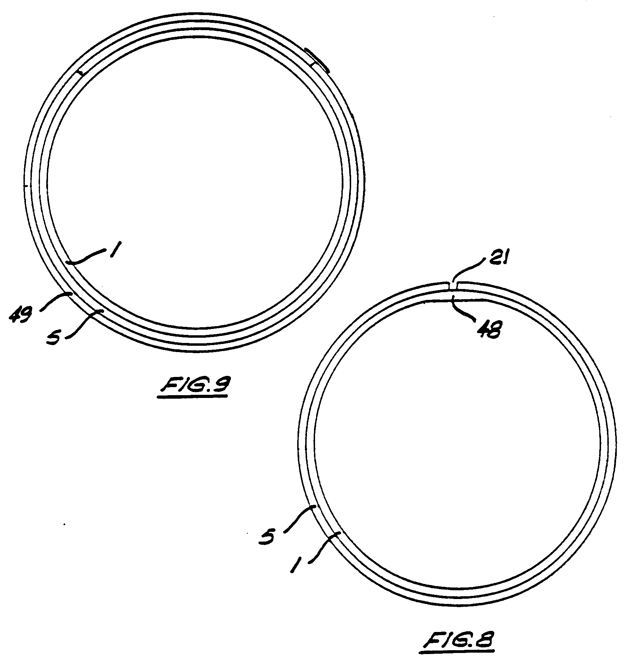

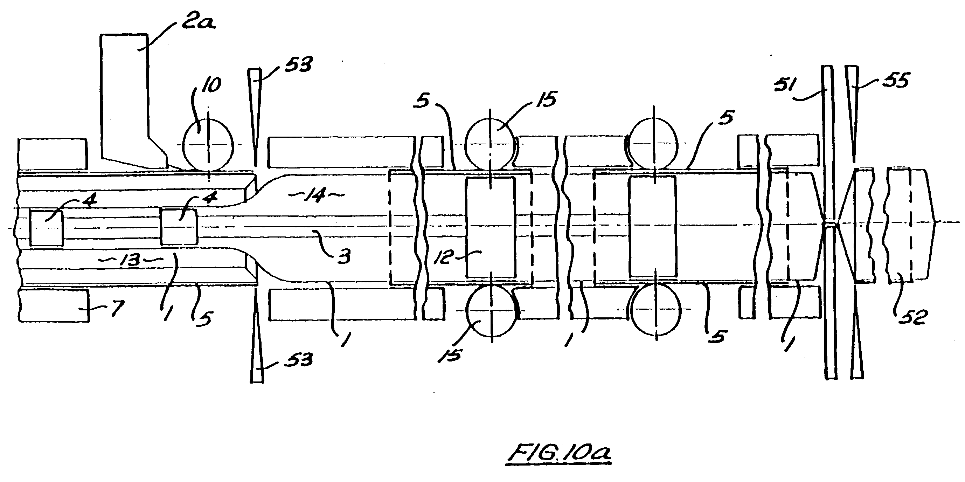

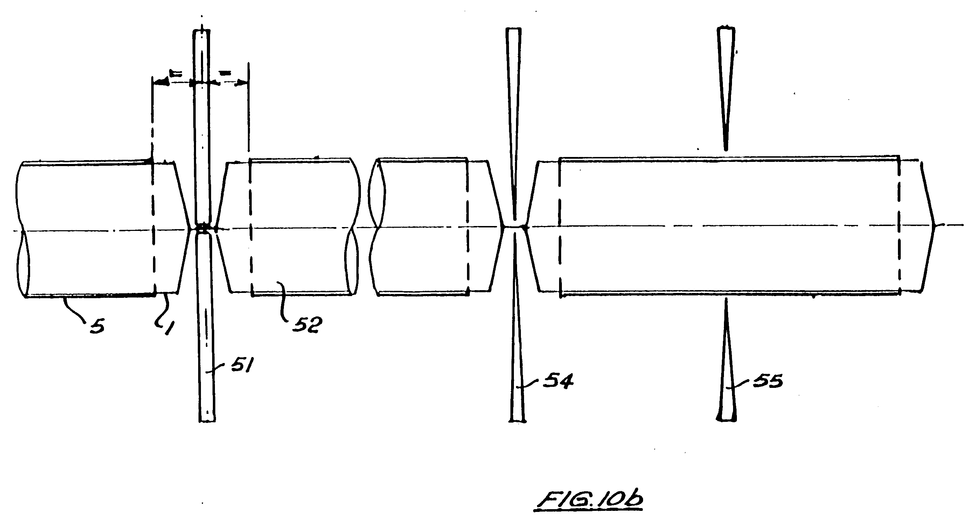

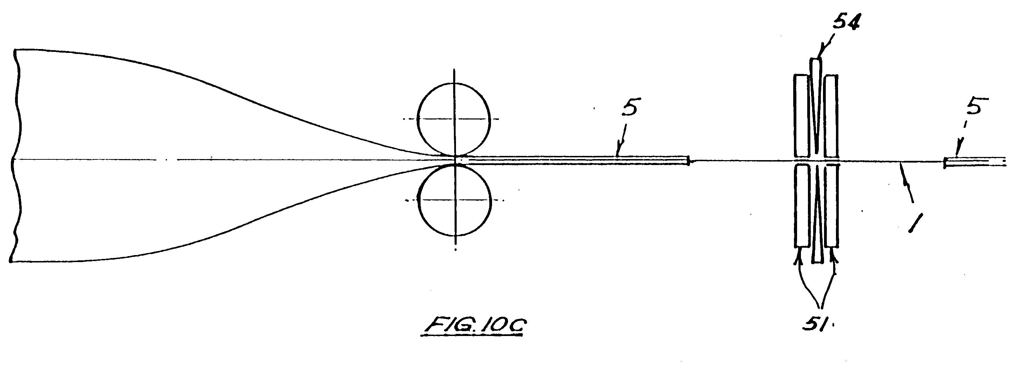

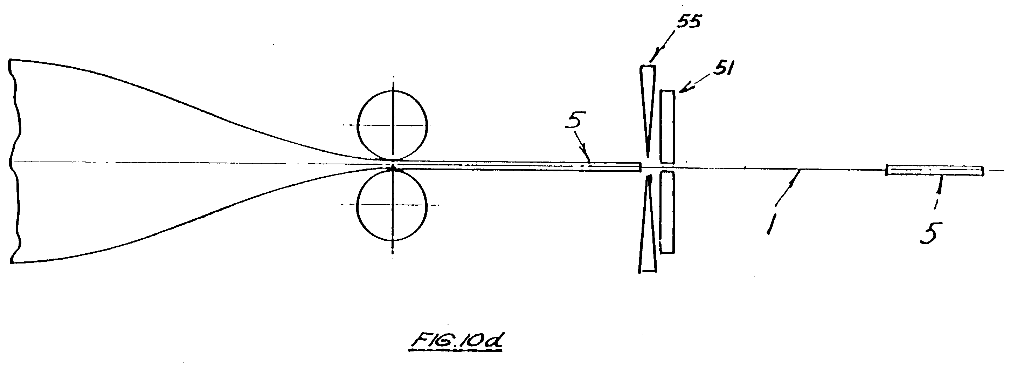

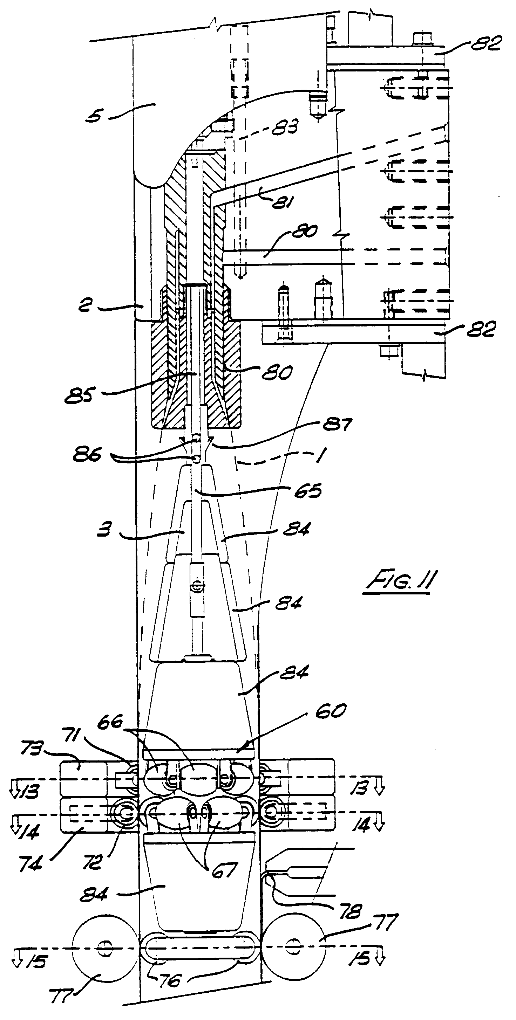

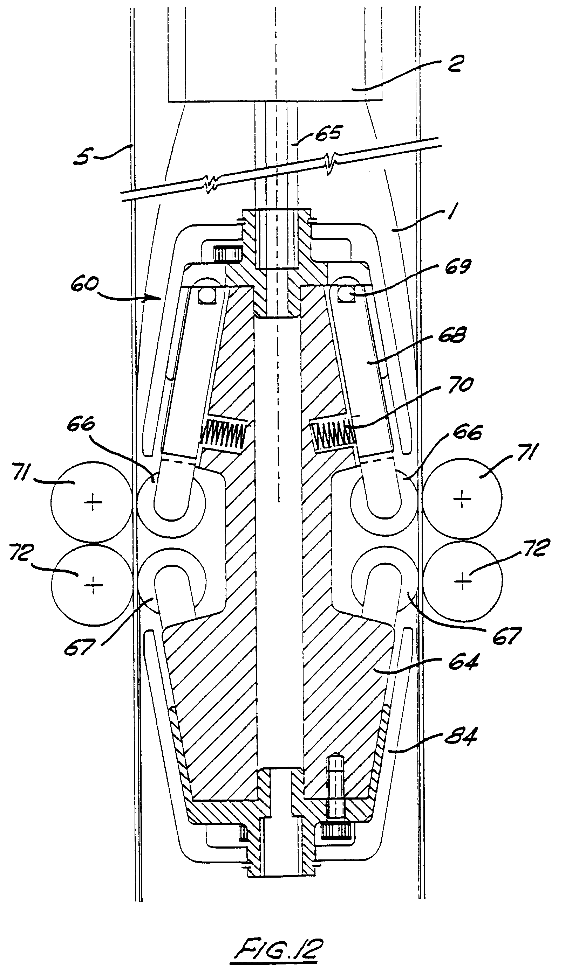

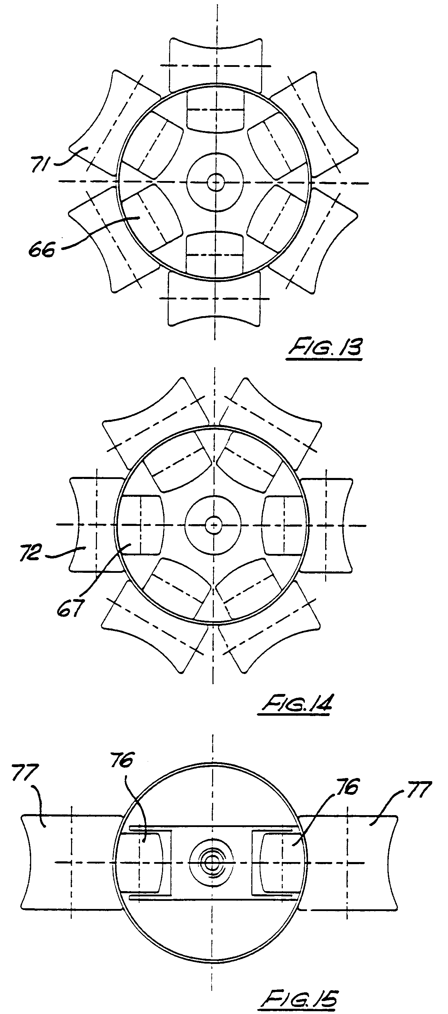

Referring now to figure 1a, a hollow tube-like member 1 is extruded from die 2 and guided over internal mandrel 3 which is provided with cooling rings 4. A flat strip of base material 5 is drawn from a roll 6 and around the extruded member 1 by being passed through the gap between a forming ring 7 and an interior supporting mandrel 8. Die 2 could of course be repositioned at the forward end of mandrel 8 if required. The longitudinal edges of the strip of base material are brought into abutment by this process in order to completely surround the extruded member 1. A strip of adhesive tape 9 is drawn from a supply over roller 10 which presses it over the region on either side of the edges of material 5 which border the abutment. In this way the base material is made into a continuous sleeve surrounding the extruded tube-like member 1.

Nozzles 11 are provided on the third cooling ring of mandrel 3 to pump fluid, preferably air, into the interior of extruded member 1 in order to increase the pressure in area 14 relative to area 13 and inflate member 1. If desired the air may be sterilised, or alternatively another sterile or even inert gas may be used. A final disc 12 is mounted on the end of mandrel 3 some distance beyond the last cooling ring in order to maintain the inflating pressure. Disc 12 may be coated with teflon, or silicon rubber, and may have an adjustable outer diameter, possibly pneumatically controlled, to ensure the correct degree of radial stretching of member 1 is achieved.

Extruded member 1 is inflated until it contacts the inner side of the sleeve of material 5. A connection is provided between sleeve 5 and extruded member 1 by means of welding or gluing; alternatively the natural adhesive properties of material 1 may be utilised to bond the two layers together. Relatively low, or negative, pressure may be applied to area 13 to assist in the inflation of member 1, and to avoid bubbles forming between the layers. Transport rollers 15 react against disc 12 to press the layers together, and exert tension on the layers of the laminated structure to stretch extruded member 1 longitudinally as it is inflated. A cutting device 16 cuts the continuous laminated tube into lengths for further treatment, for instance for making into tubes or containers.

Of course, the connecting material 9 could comprise a bead or strip 9a of plastics material extruded from a nozzle 2a adjacent the seam, as shown in figure 1b.

Alternatively a sleeve 9b of plastics material could be extruded over the entire external area of the base material and then cooled to form a continuous outer envelope, as shown in figure 1d.

It should also be appreciated that the base material 5 may be formed into a body of any desired cross-section and need not be circular as shown, for instance it may be square as shown in figures 1e and 1f, or oblong, or polygonal in cross-section.

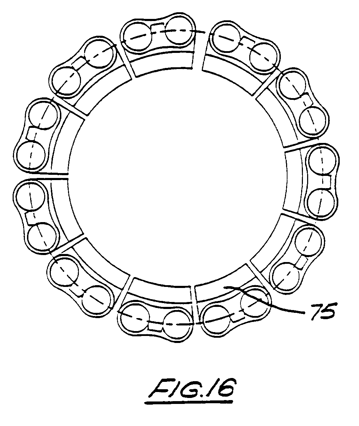

Referring now to figure 2 a strip of base material 5 will be described from which a laminated tubular body of square cross-section embodying the first aspect of the present invention may be produced. The base material 5 is pre-creased longitudinally 17 and transversely 18, or otherwise weakened as necessary for further processing. The base material is also slit 19 at intervals to allow easy separation of the finished laminated tubular bodies; in this case base material 5 is paper. Regions of the paper may be treated with contact adhesive to assist in forming the final articles. Half slots 20 are cut out of the opposing edges 21, such that when the opposing edges are butted together a complete slot 22 appears down each body, see Figure 3.

When the opposing edges 21 are butted together a transparent strip of connecting material is pressed along the join in order to connect edges 21 together and form a transparent panel covering slot 22. When the extruded member is subsequently inflated it expands and contacts the inner surfaces of the base material and transparent strip and adheres to them. In this way the seam along the base material is reinforced. The extruded member is made from a transparent material, or at least a material through which some light can pass, in order to provide an inspection window through slot 22. It is not necessary for the inspection window to be completely transparent provided any contents of the body can be perceived through it, for instance in cases where a dark coloured liquid is contained within the tubular body a window of light coloured fairly opaque material would suffice to enable the level of liquid to be discerned.

The inspection window need not, of course, be provided by means only of two half-slots 20 in the butting edges, and could equally well be provided by a complete slot cut into the body of base material 5, or a series of holes. The transparent panel need not serve to strengthen the seam in the formed tubular body, and other seam strengthening means could be employed if the strength of the bond between the inflated extruded member and the butted edges was not sufficient to hold the base material together.

The base material 5 is also penetrated by a pattern of small holes 23, and when the extruded member 1 is inflated it is pushed through holes 23 to form a series of projections 24 (see Figure 5) on the outer surface of the base material. Projections 24 are useful to provide grip on the outer surface of the final article and may be arranged in a pattern ergonomically designed to assist grip, such as hand-shaped. This is particularly useful for flimsy containers which are filled with heavy liquids, such as milk and fruit juice cartons. It should, of course, be appreciated that this feature is optional.

A slightly larger hole 25 is left in the base material 5 so that after it has been connected around the extruded member 1 and member 1 expanded, a spout 26 is formed by the expansion of the material of member 1 through hole 25 in the base material. A former or mould 27 for the spout is drawn alongside the base material, or alternatively is detachably attached at intervals in order to mould the shape of the spout. Relatively low, or negative, pressure may be applied to the distal end of former 27 in order to encourage the extruded material to adopt the shape of the nozzle. A tab 28 of plastics material as shown in figures 4a and 4b may be provided in the mould before the spout is formed such that when the spout is formed it is welded to the plastics tab. The plastics tab 28 being welded to the spout along a line of weakness 29 which allows the tab to be manually detached in order to open the spout.

Once the extruded member has been inflated to its final shape the dimensions the tubular bodies may be separated by cutters 16 prior to further processing, such as folding, sealing top and bottom and filling, to produce a finished article.

Figure 5 shows a finished article 30 with an inspection window 22, gripping protuberances 24 and a spout 26. It should be appreciated that spout 26 is collapsible and may be pushed flat against the side of finished article 28 or even inverted into it. It should also be appreciated that the spout is not limited to the form shown, and may be any convenient shape or form. A flap 31 as shown in figures 6a and 6b may be attached over spout 26. Flap 31 is of the kind which can be lifted at one end 32 to allow the contents of the article to be poured out through the spout, and resealed. The other end 33 being permanently secured to the article. Figures 6c and 6d show an alternative flap.

Figure 7 illustrates a typical entire manufacturing plant for articles produced by the invented method. The parts of the plant corresponding to parts shown in previous figures has been allocated corresponding reference numerals. A source of raw materials 34 for the extruded member feeds to the extrusion die 2. Base material 5 originates from a roll 35 which passes through a splicer 36, slitting, cutting, creasing and punching operations 37 and a flame treatment 38 before being formed between forming the ring and mandrel. The base material may also be printed if required. Adhesive tape 9 originates on a roller 39, or alternatively a sealing bead is extruded from extruder 40. Further layers of laminate may be applied, both internally and externally as desired, for instance an external sleeve may be extruded from extruder 41. The laminated bodies are cut into lengths for further processing by cutter 16. Each group of laminated bodies is cooled by cooling ring 42, and transported by caterpillar rollers 43 to be flattened, across diagonally opposite longitudinal edges, between rollers 44 before the tubular bodies are finally separated into individual articles by cutters 45. Application of flaps 29 occurs at stage 46 before the finished articles are stacked stacked 47. The individual articles may be taken from the stack formed and filled as required.

Despite the fact that it is preferred to bring the edges of the sleeve of base material 5 into abutment they may of course be overlapped if desired. A contact adhesive may be provided onto the surface of one of the edges of the material, in this case, in order to provide a secure bond along the seam.

A refinement which is preferred when the edges are brought into abutment is to selectively adjust the local thickness of the extruded inner member in order to make it thicker, and therefore stronger, in the region of the join 48, as shown in figure 8.

A process can be envisaged in which a first sleeve of base material 5 is secured by an inflated inner layer 1 as previously described, and then a second sleeve 49 of base material is drawn around the structure with its seam radially offset from the seam of the first strip of base material, that layer being secured, say, by a strip of tape or extruded bead, see figure 9.

It should also be appreciated that a hollow channel may be incorporated into die 2 and internal mandrel 3 in order to allow the tubular laminated body to be filled as the extruded inner layer is inflated. In this way the risk of contamination of the contents of the tubular bodies can be reduced.

Further, it should be appreciated that a flap 50 of base material as shown in figures 6a and 6b may be associated with the spout aperture to co-operate with flap 31 to close spout 26.

Finally, it should be appreciated that although the description has been up to now with reference to a continuous process producing an endless laminated body, the layer of base material 5 could be intermittent leaving portions of the extruded inflated member 1 exposed, as indicated in figures 10a and 10b. The exposed portions could subsequently be gathered and welded by means 51 to form a series of sealed individual containers 52, which could of course have been filled when the extruded members were inflated, or very soon after.

The intermittent supply of base material could originate from a continuous roll and be cut immediately prior to being formed around the extrusion die, for instance by cutters 53.

The individual sealed, and if desired filled, containers may be separated by means of cutters 54 cutting through the gathered weld in order to form individual containers sealed at both ends. Alternatively the containers could be separated in such a way as to be sealed at only one end (say by cutters 55), or to be open at both ends.

Containers which are filled and sealed at both ends have the advantage that the only remaining process step required is to cap the ends of the container with a cap of suitable base material. Even if not filled the sealed containers have the advantage of being crush-proof during further processing and transport as a result of the internal pressure of the inflating fluid.

When containers are being made with a cross-section which can be flattened along pre-formed longitudinal creases and it is not desired to fill the containers immediately, the sealing and parting of the inflated member 1 may be carried out as shown in figure 10c to produce a container body sealed at both ends, or, as shown in figure 10d to produce containers sealed at only one end. Individual containers produced in this way may of course enjoy any of the features previously described with reference to continuous bodies.

Figures 11 to 16 show an embodiment employing complementary internal and external pressure rollers. The internal roller assembly 60 includes an axially disposed frame 64 supported from beneath the extrusion die 2 by a central mandrel 65. The internal assembly includes two axially spaced sets of circumferentially spaced convex pressure rollers 66 and 67. The upper set of rollers 66 is staggered with respect to the lower set 67 to provide substantially continuous circumferential contact with the inner surface of the inner lining member 1.

The internal rollers are each supported by lever arms 68 hinged at 69 and resiliently biased outwardly by springs 70 towards their respective upper and lower complementary staggered sets of external concave rollers 71 and 72. These external rollers are supported by ring assemblies 73 and 74 which can each hinge outwardly to provide access to the internal assembly 60.

It will be appreciated that the internal and external rollers are spaced circumferentially around the laminated body in resiliently opposed relationship. In this way, the outer tubular body and the inner lining member are positively urged into bonding engagement by direct mechanical pressure from the respective roller assemblies. The adhesive properties of the heated lining member or an additional adhesive layer prevent the lining from subsequently breaking away from the outer body.

The external rollers may be fixed, adjustable, or free floating as required to suit particular applications. Figure 16 shows an alternative embodiment wherein the external sets of pressure rollers 71 and 72 are each replaced by a corresponding series of circumferentially disposed chain mounted friction pads 75. These pads interact with the correspondingly opposed internal rollers 66 and 67 to sandwich the laminates together, thereby ensuring adequate bonding in essentially the same manner as described above.

The Figure 11 embodiment also includes a nozzle for extruding a plastics sealing strip 78 across the opposed butted edges of the outer tubular body 5. The internal roller assembly 60 supports an inner set of opposed internal and external forming rollers 76 and 77 for forming the sealing strip against the body.

This embodiment also includes a double path die assembly where an outer annular layer of adhesive is applied through passage 80 to surround a coaxial inner annular layer of barrier lining material applied through passage 81. The die 2 is heated by plate heaters 82 and cartridge heaters 83, which also supply initial internal heating to the closely adjacent outer tubular body 5, thereby assisting the bonding process.

A set of low friction plastics guards 84 protect the internal roller assembly and guide the expanding inner lining outwardly and towards the inner rollers.

Low pressure air is supplied to the interior of the inner lining by an axial passage 85 in the mandrel 65. The air exits through holes 86 and at least part is directed upwardly towards the die by conical deflector 87 to balloon the lining outwards.

In other embodiments, the die may be configured to extrude a number of coaxial annular layers to suit particular applications. For example, the product may require several different types of barrier material in addition to an adhesive layer. In other cases the adhesive properties of the barrier material may be sufficient for only a single inner lining, without the need for a separate adhesive layer.

It will be appreciated that by ensuring proper adhesive bonding and thereby preventing subsequent separation of the lining member in a substantially continuous process, the present invention represents a commercially significant improvement over the prior art.

Although the invention has been described with reference to specific examples, it will be appreciated by those skilled in the art that the invention can be embodied in many other forms.

## Claims

1. A method of continuously forming laminated tubular bodies of preselected lengths, said method including the steps of drawing opposite longitudinal edges of a strip (5) of flexible sheet material into close proximity, joining said longitudinal edges to form a tubular body (5) having an inner surface and an outer surface, extruding a hollow plastics lining member (1) within said tubular body (5), expanding the hollow lining member (1) within the tubular body (5) to form a substantially continuous inner lining (1), bringing the inner lining (1) into bonding engagement with the inner surface of the tubular body (5), applying bonding pressure to continuously form a laminated tube, and cutting the tube into said bodies, characterised in that internal bonding pressure and external bonding pressure are applied substantially simultaneously to bond the inner lining (1) strongly to the inner surface of the tubular body (5), and in that said internal bonding pressure is applied by means of resiliently biased internal pressure roller means (66-70).

2. A method according to claim 1 wherein said internal pressure roller means (66-70) comprise internal rollers (66, 67) supported by hinged lever arms (68, 69) which are resiliently biased outwardly by springs (70).

3. A method according to claim 1 or 2 wherein said external bonding pressure is applied by external pressure roller means.

4. A method according to claim 3 wherein said external pressure roller means include at least one set of external rollers circumferentially spaced around the outer periphery of the tubular body.

5. A method according to claim 4 further including the step of resiliently urging said external rollers into engagement with the outer surface of said tubular body.

6. A method according to claim 4 or 5 wherein said external rollers define a generally concave contact surface adapted to conform to an outer surface profile of a corresponding portion of the tubular body.

7. A method according to claim 1 or 2 wherein said external bonding pressure is applied by a series of circumferentially spaced friction pads.

8. A method according to any preceding claim wherein said internal pressure roller means comprises a series of internal pressure rollers spaced circumferentially around the inner surface of the tubular body.

9. A method according to claim 8 wherein said internal pressure rollers are adapted to introduce a longitudinal stretch into the lining member during the bonding step.

10. A method according to any preceding claim including the step of forming at least one aperture in said tubular body prior to expanding said lining, such that the lining extends unjoined and unbroken through said at least one aperture to form a sealed protuberance projecting outwardly beyond the outer surface of the tubular body.

11. A method according to claim 10 wherein said lining member is expanded within the tubular body by means of internal fluid pressure.

12. A method according to claim 11 wherein the hollow lining member is expanded so as to extend through said aperture to form a spout defining a channel in fluid communication with the interior of the laminated tube.

13. A method according to claim 10 including the step of forming an array of said sealed protuberances disposed to form a textured gripping surface.

14. A method according to claim 1 wherein said hollow lining member is extruded continuously from a die, wherein the respective opposite longitudinal edges of a plurality of said strips are drawn into close proximity, wherein said respective opposite longitudinal edges are joined to form a plurality of tubular bodies, wherein said tubular bodies are arranged in spaced apart relationship around the hollow lining member, and wherein said lining member is expanded to form a substantially continuous lining in intimate contact with the inner surface of each said tubular body to form a series of spaced apart laminated tubular bodies joined by intermediate sections of said hollow lining member.

15. A method according to claim 14 including the further step of gathering and sealing said intermediate sections of said lining member to form a series of interconnected individually sealed laminated tubular bodies.

16. An apparatus for continuously forming a laminated tubular body and for cutting the continuously formed laminated tubular body into preselected lengths, said apparatus comprising means (7, 8) for drawing opposite longitudinal edges of a strip (5) of flexible sheet material into close proximity, means (9, 9a, 9b) for joining said longitudinal edges to form a tubular body (5) having an inner surface and an outer surface, a die (2) for extruding a hollow plastics lining member (1) within said tubular body (5), means (11) for expanding the hollow lining member (1) within the tubular body (5) to form a substantially continuous lining (1), means for bringing the inner lining (1) into bonding engagement with the inner surface of the tubular body (5), means for applying bonding pressure to continuously form a laminated tube, and cutting means (16) for cutting the continuously formed laminated tubular body into said preselected lengths, characterised in that said means for applying bonding pressure comprises means for applying internal bonding pressure and external bonding pressure substantially simultaneously, and in that said means for applying internal bonding pressure comprises resiliently biased internal pressure roller means (66-70).

17. An apparatus according to claim 16, wherein said resiliently biased internal pressure roller means (66-70) comprise internal rollers (66, 67) supported by hinged lever arms (68, 69) which are resiliently biased outwardly by springs (70).

18. An apparatus according to claim 16 or 17 wherein said means for applying external bonding pressure comprises at least one set of external pressure rollers circumferentially spaced around the outer surface of the tubular body.

19. An apparatus according to claim 18 and further including spring bias means disposed resiliently to urge the external pressure rollers inwardly into engagement with the outer surface of the tubular body.

20. An apparatus according to claim 19 wherein each said external pressure roller defines a generally concave contact surface adapted to conform to an outer surface profile of a corresponding portion of the tubular body.

21. An apparatus according to claim 16 or 17 wherein said external pressure means include a series of circumferentially spaced friction pads.

22. An apparatus according to claim 16 wherein the internal pressure means include a set of internal pressure rollers spaced circumferentially around the inner periphery of the tubular body.

23. An apparatus according to claim 22 further including spring bias means disposed resiliently to urge the internal pressure rollers outwardly into engagement with the inner lining member.

24. An apparatus according to claim 23 wherein said internal pressure roller means are disposed also to exert tension to stretch the lining longitudinally during bonding to the tubular body.

25. An apparatus according to claim 16 wherein the internal pressure roller means include at least two axially spaced sets of generally convex internal pressure rollers disposed circumferentially around the inner periphery of the tubular body with one set staggered with respect to the other, and wherein said means for applying external bonding pressure comprises at least two axially spaced sets of generally concave external pressure rollers disposed circumferentially around the outer periphery of the body with one set staggered with respect to the other.

26. An apparatus according to claim 25 wherein said internal pressure rollers are mounted on an internal roller assembly supported from an extrusion die.

27. An apparatus according to claim 26 including a nozzle for extruding a plastics sealing strip across opposed edges of the outer tubular body, said internal roller assembly supporting an inner set of opposed internal and external forming rollers adapted to form the sealing strip against the body.

28. An apparatus according to claim 26 wherein said internal roller assembly includes a plurality of low friction guards to protect the internal roller assembly and guide the expanding inner lining member outwardly towards the inner rollers.

29. An apparatus according to claim 26 including a passage through said die for supplying fluid under pressure to the interior of said lining member to expand the lining radially outwardly toward the surrounding tubular body.

30. An apparatus according to claim 25 wherein each axially spaced set of external pressure rollers is located on a removable ring assembly.

31. An apparatus according to claim 16 wherein said extrusion die is configured to supply at least two generally coaxial annular layers of plastics material.

32. An apparatus according to claim 31 wherein said outer tubular body passes closely adjacent to said die thereby to receive heat from the die to assist in said bonding engagement.

33. Apparatus according to claim 16, further including means for forming at least one aperture in said tubular body prior to expanding said lining, such that upon expansion the lining extends unjoined and unbroken through said at least one aperture to form a sealed protuberance projecting outwardly beyond the outer surface of said tubular body.

## Patentansprüche

1. Verfahren zum durchgehenden Bilden laminierter rohrförmiger Körper mit vorgewählten Längen, das die Schritte einschließt nahes Zusammenziehen gegenüberliegender Längsränder eines Streifens (5) aus einem biegsamen Folienmaterial, Zusammenfügen der Längsränder, um einen rohrförmigen Körper (5) mit einer Innenfläche und einer Außenfläche zu bilden, Strangpressen eines hohlen Futterteils (1) aus Kunststoff innerhalb des rohrförmigen Körpers (5), Expandieren des hohlen Futterteils (1) innerhalb des rohrförmigen Körpers (5), um ein im wesentlichen durchgehendes Innenfutter (1) zu bilden, Herstellen einer Verbindung des Innenfutters (1) mit der Innenfläche des rohrförmigen Körpers (5), Anlegen eines Verbindungsdrucks, um durchgehend ein laminiertes Rohr zu bilden, und Schneiden des Rohres in die Körper, dadurch gekennzeichnet, daß ein innerer Verbindungsdruck und ein äußerer Verbindungsdruck im wesentlichen gleichzeitig angelegt werden, um das Innenfutter (1) fest mit der Innenfläche des rohrförmigen Körpers (5) zu verbinden, und der innere Verbindungsdruck mittels einer elastisch vorgespannten inneren Druckrollvorrichtung (66-70) angelegt wird.

2. Verfahren nach Anspruch 1, bei dem die innere Druckrollvorrichtung (66-70) innere Rollen (66,67) aufweist, die von schwenkbaren Hebelarmen (68, 69) getragen werden, welche durch Federn (70) elastisch nach außen vorgespannt sind.

3. Verfahren nach Anspruch 1 oder 2, bei dem der äußere Verbindungsdruck durch eine äußere Druckrollvorrichtung angelegt wird.

4. Verfahren nach Anspruch 3, bei dem die äußere Druckrollvorrichtung zumindest einen Satz äußere Rollen einschließt, die um den Außenumfang des rohrförmigen Körpers herum in Umfangsabständen angeordnet sind.

5. Verfahren nach Anspruch 4, ferner mit dem Schritt elastisches Drängen der äußeren Rollen in Anlage an die äußere Oberfläche des rohrförmigen Körpers.

6. Verfahren nach Anspruch 4 oder 5, bei dem die äußeren Rollen eine allgemein konkave Berührungsfläche definieren, die so eingerichtet ist, daß sie einem äußeren Oberflächenprofil eines entsprechenden Teils des rohrförmigen Körpers entspricht.

7. Verfahren nach Anspruch 1 oder 2, bei dem der äußere Verbindungsdruck durch eine Reihe von entlang dem Umfang beabstandeten Reibkissen angelegt wird.

8. Verfahren nach einem der vorhergehenden Ansprüche, bei dem die innere Druckrollvorrichtung eine Reihe von inneren Druckrollen umfaßt, die um die innere Oberfläche des rohrförmigen Körpers herum in Umfangsabständen angeordnet sind.

9. Verfahren nach Anspruch 8, bei dem die inneren Druckrollen so eingerichtet sind, daß sie während des Schritts des Verbindens eine Längsdehnung in das Futterteil einführen.

10. Verfahren nach einem der vorhergehenden Ansprüche, mit dem Schritt Bilden zumindest einer Öffnung in dem rohrförmigen Körper vor dem Expandieren des Futters, so daß sich das Futter durch die zumindest eine Öffnung ungebunden und ununterbrochen so erstreckt, daß es einen versiegelten Höcker bildet, der über die äußere Oberfläche des rohrförmigen Körpers hinaus nach außen vorsteht.

11. Verfahren nach Anspruch 10, bei dem das Futterteil innerhalb des rohrförmigen Körpers durch inneren Fluiddruck expandiert wird.

12. Verfahren nach Anspruch 11, bei dem das hohle Futterteil so expandiert wird, daß es sich durch die Öffnung erstreckt, um eine einen Kanal in Fluidverbindung mit dem Innenraum des laminierten Rohres definierende Tülle zu bilden.

13. Verfahren nach Anspruch 10, mit dem Schritt Bilden eines Feldes der versiegelten Höcker, die so angeordnet sind, daß sie eine texturierte Greiffläche bilden.

14. Verfahren nach Anspruch 1, bei dem das hohle Futterteil durchgehend aus einer Preßform stranggepreßt wird, die jeweiligen gegenüberliegenden Längsränder mehrerer Streifen nahe zusammengezogen werden, die jeweiligen gegenüberliegenden Längsränder zusammengefügt werden, um mehrere rohrförmige Körper zu bilden, die rohrförmigen Körper um das hohle Futterteil beabstandet angeordnet werden und das Futterteil expandiert wird, um ein im wesentlichen durchgehendes Futter in engem Kontakt mit der inneren Oberfläche jedes rohrförmigen Körpers zu bilden, um eine Reihe beabstandeter laminierter rohrförmiger Körper zu schaffen, die durch Zwischenabschnitte des hohlen Futterteils verbunden sind.

15. Verfahren nach Anspruch 14 mit dem weiteren Schritt Zusammenziehen und versiegeln der zwischenabschnitte des Futterteils, um eine Reihe untereinander verbundener, einzeln versiegelter laminierter rohrförmiger Körper zu bilden.

16. Gerät zum durchgehenden Bilden eines laminierten rohrförmigen Körpers und zum Schneiden des durchgehend gebildeten laminierten rohrförmigen Körpers in vorgewählte Längen, mit einer Einrichtung (7, 8), um gegenüberliegende Längsränder eines Streifens (5) aus einem biegsamen Folienmaterial nahe zusammenzuziehen, einer Einrichtung (9, 9a, 9b) zum Zusammenfügen der Längsränder, um einen rohrförmigen Körper (5) mit einer inneren Oberfläche und einer äußeren Oberfläche zu bilden, einer Preßform (2) zum Strangpressen eines hohlen Futterteils (1) aus Kunststoff innerhalb des rohrförmigen Körpers (5), einer Einrichtung (11) zum Expandieren des hohlen Futterteils (1) innerhalb des rohrförmigen Körpers (5), um ein im wesentlichen durchgehendes Futter (1) zu schaffen, einer Einrichtung zum Herstellen einer verbindung des Innenfutters (1) mit der inneren Oberfläche des rohrförmigen Körpers (5), einer Einrichtung zum Anlegen eines Verbindungsdrucks, um durchgehend ein laminiertes Rohr zu bilden, und einer Schneideeinrichtung (16) zum Schneiden des durchgehend gebildeten laminierten rohrförmigen Körpers in die vorgewählten Längen, dadurch gekennzeichnet, daß die Einrichtung zum Anlegen eines Verbindungsdrucks eine Einrichtung zum im wesentlichen gleichzeitigen Anlegen eines inneren Verbindungsdrucks und eines äußeren Verbindungdrucks aufweist und die Einrichtung zum Anlegen des inneren Verbindungsdrucks eine elastisch vorgespannte innere Druckrollvorrichtung (66, 70) aufweist.

17. Gerät nach Anspruch 16, bei dem die elastisch vorgespannte innere Druckrollvorrichtung (66-70) innere Rollen (66, 67) aufweist, die von schwenkbaren Hebelarmen (68, 69) getragen werden, die durch Federn (70) elastisch nach außen vorgespannt sind.

18. Gerät nach Anspruch 16 oder 17, bei dem die Einrichtung zum Anlegen eines äußeren Verbindungsdrucks zumindest einen Satz um die äußere Oberfläche des rohrförmigen Körpers herum in Umfangsabständen angeordnete äußere Druckrolleo aufweist.

19. Gerät nach Anspruch 18, ferner mit einer Federvorspanneinrichtung, die so angeordnet ist, daß sie die äußeren Druckrollen elastisch nach innen in Anlage an die äußere Oberfläche des rohrförmigen Körpers drängt.

20. Gerät nach Anspruch 19, bei dem jede äußere Druckrolle eine allgemein konkave Berührungsfläche definiert, die so eingerichtet ist, daß sie einem äußeren Oberflächenprofil eines entsprechenden Teils des rohrförmigen Körpers entspricht.

21. Gerät nach Anspruch 16 oder 17, bei dem die äußere Druckeinrichtung eine Reihe entlang dem Umfang beabstandeter Reibkissen einschließt.

22. Gerät nach Anspruch 16, bei dem die innere Druckeinrichtung einen Satz innere Druckrollen einschließt, die um den Innenumfang des rohrförmigen Körpers herum in Umfangsahständen angeordnet sind.

23. Gerät nach Anspruch 22, ferner mit einer Federvorspanneinrichtung, die so angeordnet ist, daß sie die inneren Druckrollen elastisch nach außen in Anlage an das Innenfutterteil drängt.

24. Gerät nach Anspruch 23, bei dem die innere Druckrollvorrichtung so angeordnet sind, daß sie auch einen Zug ausübt, um das Futter während des Verbindens mit dem rohrförmigen Körper in Längsrichtung zu dehnen.

25. Gerät nach Anspruch 16, bei dem die innere Druckrollvorrichtung zumindest zwei axial beabstandete Sätze im allgemeinen konvexe innere Druckrollen einschließt, die um den Innenumfang des rohrförmigen Körpers herum angeordnet sind, wobei ein Satz bezüglich des anderen versetzt ist, und die Einrichtung zum Anlegen eines äußeren Verbindungsdruckes zumindest zwei axial beabstandete Sätze im allgemeinen konkave äußere Druckrollen aufweist, die um den Außenumfang des Körpers herum angeordnet sind, wobei ein Satz bezuglich des anderen versetzt ist.

26. Gerät nach Anspruch 25, bei dem die inneren Druckrollen auf einer von einer Strangpreßform getragenen inneren Rollenanordnung angebrachtsind.

27. Gerät nach Anspruch 26, mit einer Düse zum Strangpressen eines versiegelnden Streifens aus Kunststoff über gegenüberliegende Ränder des äußeren rohrförmigen Körpers, wobei die innere Rollenanordnung einen inneren Satz gegenüberliegende innere und äußere Formrollen trägt, die eingerichtet sind, um den versiegelnden Streifen an den Körper anzuformen.

28. Gerät nach Anspruch 26, bei dem die innere Rollenanordnung mehrere Führungen mit geringer Reibung enthält, um die innere Rollenanordnung zu schützen und das expandierende Innenfutterteil nach außen zu den inneren Rollen zu führen.

29. Gerät nach Anspruch 26, mit einem Durchgang durch die Preßform zum Zuführen von Fluid unter Druck in das Innere des Futterteils, um das Futter radial nach außen zum umgebenden rohrförmigen Körper hin zu expandieren.

30. Gerät nach Anspruch 25, bei dem sich jeder axial beabstandete Satz äußere Druckrollen auf einem abnehmbaren Ringaufbau befindet.

31. Gerät nach Anspruch 16, bei dem die Strangpreßform so aufgebaut ist, daß sie zumindest zwei im allgemeinen koaxiale ringförmige Schichten aus Kunststoffmaterial liefert.

32. Gerät nach Anspruch 31, bei dem der äußere rohrförmige Körper die Preßform eng benachbart passiert, um dadurch Wärme von der Preßform zu empfangen, um die verbindende Anschmiegung zu unterstützen.

33. Gerät nach Anspruch 16, ferner mit einer Einrichtung zum Bilden zumindest einer Öffnung in dem rohrförmigen Körper vor dem Expandieren des Futters, so daß sich bei Expansion das Futter durch die zumindest eine Öffnung ungebunden und ununterbrochen so erstreckt, daß es einen versiegelten Höcker bildet, der über die äußere Oberfläche des rohrförmigen Körpers hinaus nach außen vorsteht.

## Revendications

1. Procédé pour former en continu des corps tubulaires stratifiés ayant des longueurs présélectionnées, ledit procédé comportant les étapes consistant à tirer les bords longitudinaux opposés d'une bande (5) de matériau en feuille souple jusqu'à leur proximité étroite, relier lesdits bords longitudinaux pour former un corps tubulaire (5) ayant une surface intérieure et une surface extérieure, extruder un élément de recouvrement creux (1) en matière plastique dans ledit corps tubulaire (5), expanser l'élément de revêtement creux (1) dans le corps tubulaire (5) pour former un revêtement intérieur (1) sensiblement continu, amener le revêtement intérieur (1) en contact de fixation avec la surface intérieure du corps tubulaire (5), appliquer une pression de fixation pour former de manière continue un tube stratifié, et découper le tube sous la forme desdits corps, caractérisé en ce qu'une pression de fixation intérieure et une pression de fixation extérieure sont appliquées sensiblement simultanément pour fixer le revêtement intérieur (1) de manière forte, sur la surface intérieure du corps tubulaire (5), et en ce que la pression de fixation intérieure est appliquée par l'intermédiaire de moyens (66 à 70) formant rouleau d'appui intérieur rappelé élastiquement.

2. Procédé selon la revendication 1 dans lequel lesdits moyens (66 à 70) formant rouleau d'appui intérieur comportent des rouleaux intérieurs (66, 67) supportés par des bras de levier articulés (68, 69) qui sont rappelés élastiquement vers l'extérieur par des ressorts (70).

3. Procédé selon la revendication 1 ou 2 dans lequel ladite pression de fixation extérieure est appliquée par des moyens formant rouleau d'appui extérieur.

4. Procédé selon la revendication 3 dans lequel lesdits moyens formant rouleau d'appui extérieur comportent au moins un jeu de rouleaux extérieurs espacés circonférentiellement autour de la périphérie extérieure du corps tubulaire.

5. Procédé selon la revendication 4 comportant de plus l'étape consistant à repousser élastiquement lesdits rouleaux extérieurs jusqu'au contact avec la surface extérieure dudit corps tubulaire.

6. Procédé selon la revendication 4 ou 5 dans lequel lesdits rouleaux extérieurs définissent une surface de contact généralement concave adaptée pour se conformer au profil de surface extérieure d'une partie correspondante du corps tubulaire.

7. Procédé selon la revendication 1 ou 2, dans lequel ladite pression de fixation extérieure est appliquée par une série de patins de friction espacés circonférentiellement.

8. Procédé selon l'une quelconque des revendications précédentes, dans lequel lesdits moyens formant rouleau d'appui intérieur comportent une série de rouleaux d'appui intérieur espacés circonférentiellement autour de la surface intérieure du corps tubulaire.

9. Procédé selon la revendication 8 dans lequel lesdits rouleaux d'appui intérieur sont adaptés pour introduire un étirement longitudinal dans l'élément de revêtement pendant l'étape de fixation.

10. Procédé selon l'une quelconque des revendications précédentes, comportant l'étape consistant à former au moins une ouverture dans ledit corps tubulaire avant d'expanser ledit revêtement, de sorte que le revêtement s'étende de manière non-reliée et non-brisée à travers ladite au moins une ouverture pour former une protubérance étanche en saillie vers l'extérieur au-delà de la surface extérieure du corps tubulaire.

11. Procédé selon la revendication 10 dans lequel ledit élément de revêtement est expansé dans le corps tubulaire par l'intermédiaire d'une pression intérieure de fluide.

12. Procédé selon la revendication 11 dans lequel l'élément de revêtement creux est expansé de manière à s'étendre à travers ladite ouverture pour former un bec définissant un canal en communication avec l'intérieur du tube stratifié.

13. Procédé selon la revendication 10 comportant l'étape consistant à former un réseau desdites protubérances étanches disposées pour former une surface de saisie texturée.

14. Procédé selon la revendication 1 dans lequel ledit élément de revêtement creux est extrudé en continu à partir d'une filière, dans lequel les bords longitudinaux opposés respectifs de plusieurs bandes sont tirés à proximité étroite l'un de l'autre, dans lequel lesdits bords longitudinaux opposés respectifs sont reliés pour former plusieurs corps tubulaires, dans lequel lesdits corps tubulaires sont agencés, en étant espacés, autour de l'élément de revêtement creux, et dans lequel ledit élément de revêtement est expansé pour former un revêtement pratiquement continu en contact intime avec la surface intérieure de chaque dit corps tubulaire pour former une série de corps tubulaires stratifiés écartés, reliés par des tronçons intermédiaires dudit élément de revêtement creux.

15. Procédé selon la revendication 14 comportant de plus l'étape consistant à rassembler et rendre étanche lesdits tronçons intermédiaires dudit élément de revêtement pour former une série de corps tubulaires stratifiés individuellement étanches, connectés.

16. Dispositif pour former en continu un corps tubulaire stratifié et pour découper le corps tubulaire stratifié formé en continu selon des longueurs présélectionnées, ledit dispositif comportant des moyens (7, 8) pour tirer des bords longitudinaux opposés d'une bande (5) de matériau en feuille souple jusqu'à ce qu'ils soient à proximité étroite l'un de l'autre, des moyens (9, 9a, 9b) pour relier lesdits bords longitudinaux pour former un corps tubulaire (5) ayant une surface intérieure et une surface extérieure, une filière (2) pour extruder un élément de revêtement creux (1) en matière plastique dans ledit corps tubulaire (5), des moyens (11) pour expanser l'élément de revêtement creux (1) dans le corps tubulaire (5) pour former un revêtement (1) sensiblement continu, des moyens pour amener le revêtement intérieur (1) en contact de fixation avec la surface intérieure du corps tubulaire (5), des moyens pour appliquer une pression de fixation pour former en continu un tube stratifié, et des moyens de découpe (16) pour découper le corps tubulaire stratifié formé en continu selon lesdites longueurs présélectionnées, caractérisé en ce que lesdits moyens pour appliquer une pression de fixation comportent des moyens pour appliquer une pression de fixation intérieure et une pression de fixation extérieure sensiblement simultanément, et en ce que lesdits moyens pour appliquer une pression de fixation intérieure comportent des moyens (66 à 70) formant rouleau d'appui intérieur rappelé élastiquement.

17. Dispositif selon la revendication 16, dans lequel lesdits moyens (66 à 70) formant rouleau d'appui intérieur rappelé élastiquement comportent des rouleaux intérieurs (66, 67) supportés par des bras de levier articulés (68, 69) qui sont rappelés élastiquement vers l'extérieur par des ressorts (70).

18. Dispositif selon la revendication 16 ou 17 dans lequel lesdits moyens pour appliquer une pression de fixation extérieure comportent au moins un jeu de rouleaux d'appui extérieurs espacés circonférentiellement autour de la surface extérieure du corps tubulaire.

19. Dispositif selon la revendication 18 comportant de plus des moyens de rappel par ressort disposés élastiquement pour repousser les rouleaux d'appui extérieurs vers l'intérieur jusqu'au contact avec la surface extérieure du corps tubulaire.

20. Dispositif selon la revendication 19 dans lequel chaque rouleau d'appui extérieur définit une surface de contact généralement concave adaptée pour se conformer au profil de la surface extérieure d'une partie correspondante du corps tubulaire.

21. Dispositif selon la revendication 16 ou 17 dans lequel lesdits moyens d'appui extérieur comportent une série de patins de friction espacés circonférentiellement.

22. Dispositif selon la revendication 16 dans lequel les moyens d'appui intérieur comportent un jeu de rouleaux d'appui intérieurs espacés circonférentiellement autour de la périphérie intérieure du corps tubulaire.

23. Dispositif selon la revendication 22 comportant de plus des moyens de rappel par ressort disposés élastiquement pour repousser les rouleaux d'appui intérieurs vers l'extérieur jusqu'au contact avec l'élément de revêtement intérieur.

24. Dispositif selon la revendication 23 dans lequel lesdits moyens formant rouleau d'appui intérieur sont disposés aussi pour exercer une traction pour étirer le revêtement longitudinalement pendant la fixation sur le corps tubulaire.

25. Dispositif selon la revendication 16, dans lequel les moyens formant rouleau d'appui intérieur comportent au moins deux jeux espacés axialement de rouleaux d'appui intérieurs généralement convexes disposés circonférentiellement autour de la périphérie intérieure du corps tubulaire, un jeu étant étagé par rapport à l'autre, et dans lequel lesdits moyens pour appliquer la pression de fixation extérieure comportent au moins deux jeux espacés axialement de rouleaux d'appui extérieurs généralement concaves disposés circonférentiellement autour de la périphérie extérieure du corps, un jeu étant étagé par rapport à l'autre.

26. Dispositif selon la revendication 25, dans lequel lesdits rouleaux d'appui intérieurs sont montés sur un ensemble de rouleaux intérieurs supporté à partir d'une filière d'extrusion.

27. Dispositif selon la revendication 26 comportant une buse pour extruder une bande d'étanchéité en matière plastique à travers des bords opposés du corps tubulaire extérieur, ledit ensemble de rouleaux intérieurs supportant un jeu intérieur de rouleaux de formation intérieurs et extérieurs opposés, adapté pour former la bande d'étanchéité contre le corps.

28. Dispositif selon la revendication 26 dans lequel ledit ensemble de rouleaux intérieurs comporte plusieurs protections à faible friction pour protéger l'ensemble de rouleaux intérieurs et guider l'élément de revêtement intérieur s'expansant vers l'extérieur en direction des rouleaux intérieurs.

29. Dispositif selon la revendication 26, comportant un passage à travers ladite filière pour alimenter du fluide sous pression vers l'intérieur dudit élément de revêtement pour expanser le revêtement radialement vers l'extérieur en direction du corps tubulaire périphérique.

30. Dispositif selon la revendication 25, dans lequel chaque jeu axialement espacé de rouleaux d'appui extérieurs est situé sur un ensemble formant anneau amovible.

31. Dispositif selon la revendication 16 dans lequel ladite filière d'extrusion est configurée de manière à alimenter au moins deux couches annulaires généralement coaxiales de matière plastique.

32. Dispositif selon la revendication 31 dans lequel ledit corps tubulaire extérieur passe en étant étroitement adjacent à ladite filière de manière à recevoir la chaleur provenant de la filière pour aider audit contact de fixation.

33. Dispositif selon la revendication 16, comportant de plus des moyens pour former au moins une ouverture dans ledit corps tubulaire avant d'expanser ledit revêtement, de sorte que lors de l'expansion le revêtement s'étende de manière non-liée et non-brisée à travers ladite au moins une ouverture pour former une protubérance étanche faisant saillie vers l'extérieur au-delà de la surface extérieure dudit corps tubulaire.
